(19)

Europäisches
Patentamt
European
Patent Office
Office européen
des brevets

(11) **EP 3 406 487 A1**

(12) **EUROPEAN PATENT APPLICATION**

(43) Date of publication:
**28.11.2018 Bulletin 2018/48**

(51) Int Cl.:
**B60Q 1/115** (2006.01)

(21) Application number: **18172762.9**

(22) Date of filing: **16.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.05.2017 JP 2017100172**

(71) Applicant: **STANLEY ELECTRIC CO., LTD.**
**Tokyo 153-8636 (JP)**

(72) Inventors:
• **NAKAMURA, Shigekatsu**
**Tokyo, 153-8636 (JP)**
• **HIRAI, Yusuke**
**Tokyo, 153-8636 (JP)**

(74) Representative: **Klang, Alexander H.**
**Wagner & Geyer**
**Gewürzmühlstrasse 5**
**80538 München (DE)**

(54) **CONTROL DEVICE FOR VEHICULAR LAMP AND VEHICLE LIGHTING SYSTEM**

(57)     To improve the reliability of an automatic leveling control device for a vehicular lamp (14) using acceleration sensors (11, 12, 13). The device variably controls optical axis of the lamp (14) according to the attitude change in a vehicle including (a) a sensor abnormality determination part (20) which determines if a first acceleration sensor (11) is abnormal based on first acceleration values detected by the first sensor (11), (b) an angle calculation part (21) using the first accelerations value to obtain an attitude angle when the sensor abnormality determination part (20) determines there is no abnormality in the first sensor (11), and uses second acceleration values detected by a second acceleration sensor (12) when the sensor abnormality determination part (20) determines there is an abnormality in the first sensor (11), and (c) an optical axis setting part (22) which generates a control signal for the optical axis based on the attitude angle obtained by the angle calculation part (21), and provides the signal to the lamp (14).

FIG.1

EP 3 406 487 A1

**(Cont. next page)**

GRAVITATIONAL
ACCELERATION (G)

ATTITUDE ANGLE OF ACCELERATION SENSOR(° )

# FIG.5

FIG.6

**Description**

BACKGROUND OF THE INVENTION

Field of the Invention

The present invention relates to a technique for controlling light irradiation direction by a vehicular lamp (for example, a pair of lamp units) corresponding to an attitude change of a vehicle.

Description of the Background Art

Automatic leveling control for adjusting irradiation direction of light (or the optical axis) of headlamps corresponding to the attitude change of a vehicle in the pitch direction due to occupants or load is known. According to such automatic leveling control, it is possible to prevent glaring an oncoming vehicle or a preceding vehicle even when the attitude of the vehicle changes. As examples of prior art for achieving automatic leveling control, a technique using the acceleration value detected by the acceleration sensor installed in a vehicle are disclosed in Japanese Unexamined Patent Application Publication No. 2009-126268 (hereinafter referred to as Patent Document 1) and Japanese Patent No. 5787649 (hereinafter referred to as Patent Document 2).

In the above-described conventional automatic leveling control using an acceleration sensor, basically, the first axis of the acceleration sensor is associated with the front-to-rear direction of the vehicle, the second axis is associated with the up-and-down direction of the vehicle, acceleration value for each axis is detected by the sensor, and the optical axis is adjusted based on the detected acceleration values. Here, in many cases, the relationship between the detected values obtained from each of the first and second axis and the gravitational acceleration G are considered to be ideal. Specifically, it is often presumed that, regardless of the attitude of the vehicle, the square root of the sum of the square of acceleration value of the first axis and the second axis is a fixed value and is equal to the actual gravitational acceleration (1G).

However, due to various factors such as the fact that it is rare the first axis and the second axis of the acceleration sensor are perfectly orthogonal, that the plane defined by the first and the second axis and the vector of gravitational acceleration are not necessarily completely parallel, that there could be a difference in the detection sensitivity of the first axis and the second axis, that an error of a fixed value unrelated to gravity could exist, and inaccuracy of detection values due to aged deterioration of the acceleration sensor or sensor failure and so on, it is likely that the square root of the sum of the square of acceleration value of the first axis and the second axis changes in accordance with the attitude angle of the vehicle (the angle between the front-to-rear direction of the vehicle and the road surface).

In this case, since the accuracy of the calculated attitude angle in the pitch direction of the vehicle based on the acceleration values is reduced, the reliability of the automatic leveling control based on the attitude angle is inconveniently reduced.

In a specific aspect, it is an object of the present invention to provide a technique capable of improving the reliability of the automatic leveling control using acceleration sensors.

SUMMARY OF THE INVENTION

[1] A control device for a vehicular lamp according to one aspect of the present invention is a control device which variably controls optical axis of the vehicular lamp in accordance with an attitude change in the pitch direction of a vehicle including (a) a sensor abnormality determination part which determines the presence or absence of abnormal operation of a first acceleration sensor based on first acceleration values associated with each of the front-to-rear direction and the up-and-down direction of the vehicle detected by the first acceleration sensor, (b) an angle calculation part which uses the first acceleration value to obtain an attitude angle of the vehicle when the sensor abnormality determination part determines that there is no abnormality in the operation of the first acceleration sensor, and uses a second acceleration value detected by a second acceleration sensor provided at a position different from the first acceleration sensor of the vehicle when the sensor abnormality determination part determines that there is an abnormality in the operation of the first acceleration sensor, (c) an optical axis setting part which generates a control signal for controlling the optical axis of the vehicular lamp based on the attitude angle of the vehicle obtained by the angle calculation part, and provides the control signal to the vehicular lamp.

[2] A vehicular lamp system according to one aspect of the present invention is a vehicular lamp system including the above-described control device and a vehicle lamp controlled by the control device.

According to the above configurations, the reliability of the automatic leveling control using acceleration sensors can be improved.

BRIEF DESCRIPTION OF THE DRAWINGS

FIG.1 is a block diagram showing a configuration of a vehicular lamp system according to the first embodiment.

FIG.2 is a figure schematically showing the state of optical axis control of the lamp unit.

FIGS.3A through 3C are figures for explaining the installation state of the acceleration sensors.

FIG.4 is an enlarged view showing the relationship between each axis of the acceleration sensor and the acceleration in the direction of vehicle travel.

FIG.5 is a graph for explaining the operation of sensor abnormality determination part.

FIG.6 is a flowchart for explaining the operation of the vehicular lamp system.

FIG.7 is a block diagram showing a configuration of a vehicular lamp system according to the second embodiment.

DESCRIPTION OF THE PREFERRED EMBODIMENTS

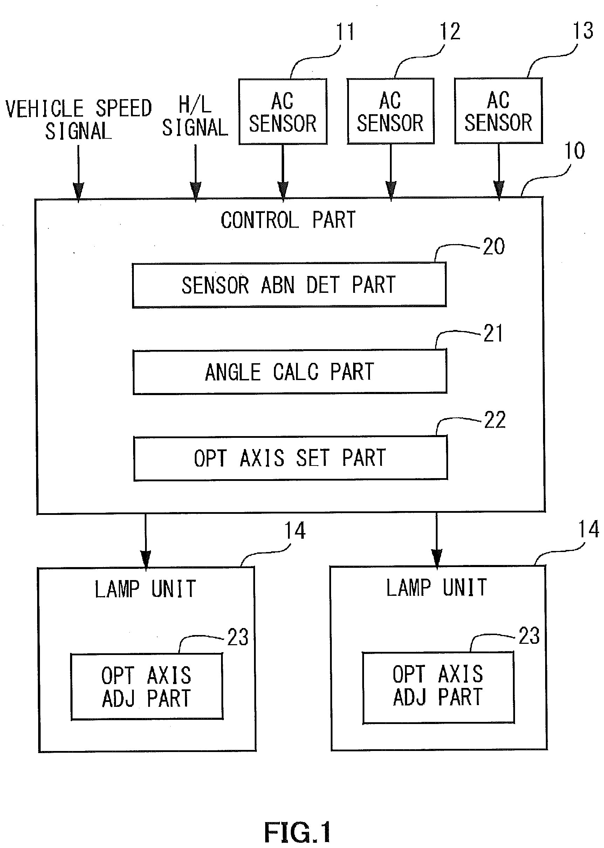

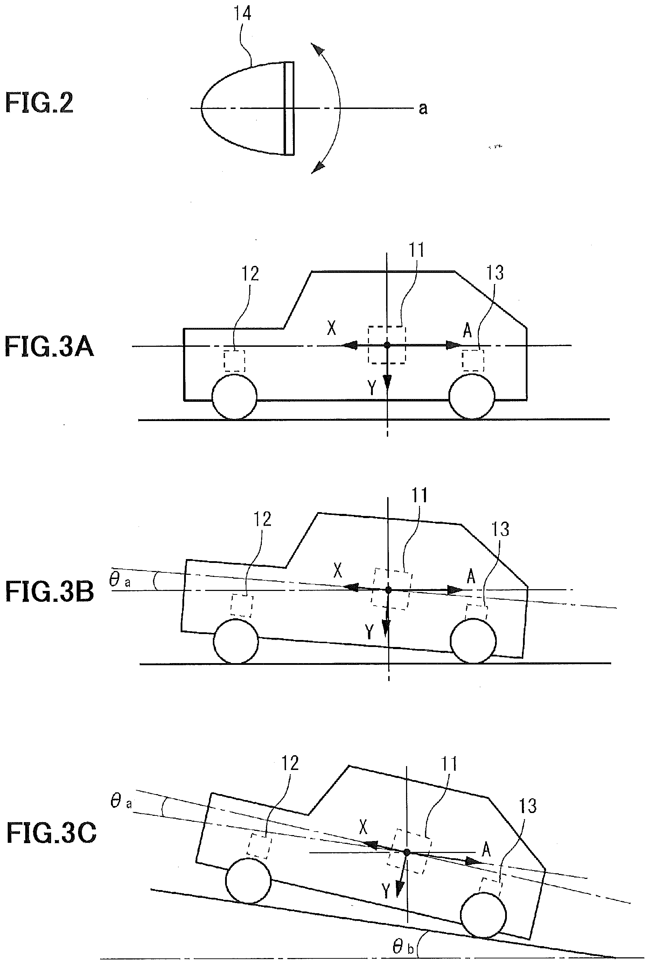

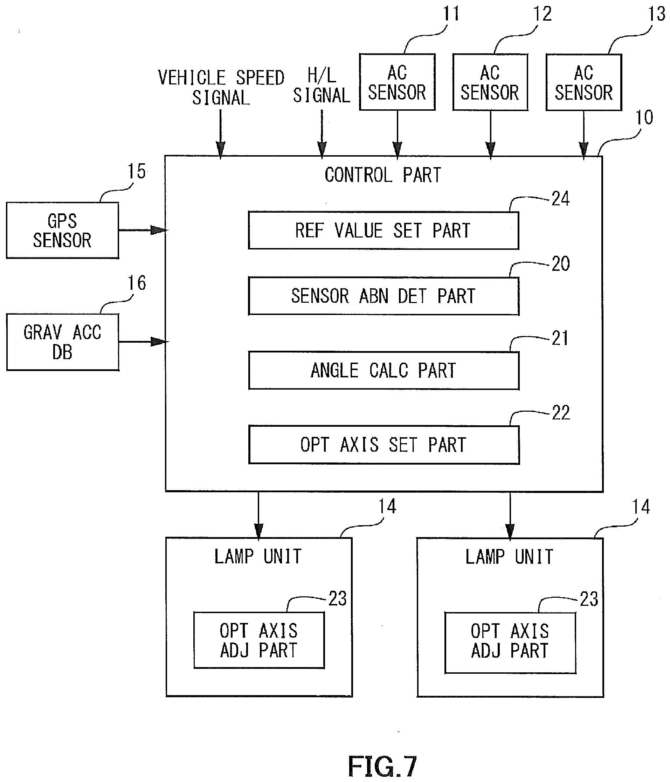

FIG.1 is a block diagram showing a configuration of a vehicular lamp system according to the first embodiment. The vehicular lamp system shown in FIG.1 includes a control part 10, a first acceleration sensor 11, a second acceleration sensor 12, a third acceleration sensor 13 (each acceleration sensor abbreviated as AC SENSOR in FIGS.1 and 7), and two lamp units 14. As schematically shown in FIG.2, this vehicular lamp system variably controls the light irradiation direction a (optical axis a) by each lamp unit 14 while the vehicle is at a stop or during travel, in accordance with the attitude change of the vehicle in the pitch direction.

The control part 10 controls the operation of the vehicular lamp system, and is configured to include a sensor abnormality determination part 20 (abbreviated as SENSOR ABN DET PART in FIGS.1 and 7), an angle calculation part 21 (abbreviated as ANGLE CALC PART in FIGS.1 and 7) and an optical axis setting part 22 (abbreviated as OPT AXIS SET PART in FIGS.1 and 7). The control part 10 carries out a predetermined operation program in a computer system comprising a CPU, ROM, RAM, and the like, for example.

The first acceleration sensor 11 is a sensor capable of detecting at least accelerations in the direction of two mutually orthogonal axes and is installed at a predetermined position at substantially the center in the front-to-rear direction of the vehicle. This first acceleration sensor 11 is installed in the vehicle so that the axial direction of one axis matches the front-to-rear direction (the horizontal direction) of the vehicle and the axial direction of the other axis matches the up-and-down direction (the vertical direction) of the vehicle, for example.

The second acceleration sensor 12 is a sensor capable of detecting at least accelerations in the direction of two mutually orthogonal axes and is installed at a predetermined position on the front side of the vehicle relative to the installation position of the first acceleration sensor 11 in the vehicle This second acceleration sensor 12 is installed in the vehicle so that the axial direction of one axis matches the front-to-rear direction of the vehicle and the axial direction of the other axis matches the up-and-down direction of the vehicle, for example.

The third acceleration sensor 13 is a sensor capable of detecting at least accelerations in the direction of two mutually orthogonal axes and is installed at a predetermined position on the rear side of the vehicle relative to the installation position of the first acceleration sensor 11 in the vehicle. This third acceleration sensor 13 is installed in the vehicle so that the axial direction of one axis matches the front-to-rear direction of the vehicle and the axial direction of the other axis matches the up-and-down direction of the vehicle, for example.

Here, the second acceleration sensor 12 and the third acceleration sensor 13 are sensors originally provided for uses other than the optical axis adjustment of the lamp units 14 of the vehicle, but in the present embodiment, the detected values from these two sensors are also used for adjusting the optical axis of the lamp units 14. The "uses" referred to here include acceleration detection for an electronic control suspension device, a vehicle side slip prevention device, a hill start assisting device (uphill start auxiliary device), an electronic parking brake device, a rollover detection device, for example.

Each of the lamp units 14 is installed at a predetermined position in the front portion of the vehicle, and is configured to have a light source, a reflecting mirror, and the like for irradiating the front of the vehicle with light. Each lamp unit 14 has an optical axis adjusting part 23 (abbreviated as OPT AXIS ADJ PART in FIGS.1 and 7) for adjusting the optical axis a up and down in the pitch direction of the vehicle. Each optical axis adjusting part 23 has, for example, an actuator for vertically adjusting the direction of the light source of each lamp unit 14, and operates based on a control signal provided from the control part 10.

The sensor abnormality determination part 20 determines if the operation of the first acceleration sensor 11 is normal or abnormal by comparing the values of gravitational acceleration calculated from the detected values of the first acceleration sensor 11 with the actual value of gravitational acceleration (1G).

Based on the acceleration values obtained from the first acceleration sensor 11, the angle calculation part 21 calculates an attitude angle (a vehicle angle) which indicates the attitude in the pitch direction of the vehicle. Further, if the sensor abnormality determination part 20 determines that the operation state of the first acceleration sensor 11 is abnormal, then the angle calculation part 21 calculates the attitude angle of the vehicle using the detected values of the second acceleration sensor 12 and the third acceleration sensor 13 .

Based on the attitude angle calculated by the angle calculation part 21, the optical axis setting part 22 generates a control signal for controlling the optical axis a of each lamp unit 14, and outputs the control signal to each lamp unit 14.

FIGS.3A through 3C are figures for explaining the installation state of the acceleration sensors. As shown in FIG.3A, in the present embodiment, in order to simplify the description, it is assumed that the first acceleration sensor 11 is disposed so that the axial direction of the X axis which is the first axis of the first acceleration sensor 11 matches the front-to-rear direction (the horizontal direction) of the vehicle, and the axial direction of the Y axis which is the second axis of the acceleration sensor 12 matches the up-and-down direction (the vertical direction) of the vehicle. Similarly, it is assumed that each of the second acceleration sensor 12 and the third acceleration sensor 13 is disposed so that the axial direction of each X axis which is the first axis of the respective sensors matches the front-to-rear direction (the horizontal direction) of the vehicle, and the axial direction of each Y axis which is the second axis of the respective sensors matches the up-and-down direction (the vertical direction) of the vehicle. Further, the vector denoted by A in FIG.3A indicates the acceleration in the direction of travel of the vehicle which is hereinafter referred to as "vehicle traveling direction acceleration".

As shown, the first acceleration sensor 11 is installed at a predetermined position between the second acceleration sensor 12 and the third acceleration sensor 13 in the front-to-rear direction of the vehicle. The second acceleration sensor 12 is installed, for example, at a predetermined position of the vehicle body close to the suspension associated with the front wheels of the vehicle. The third acceleration sensor 13 is installed, for example, at a predetermined position of the vehicle body close to the suspension associated with the rear wheels of the vehicle.

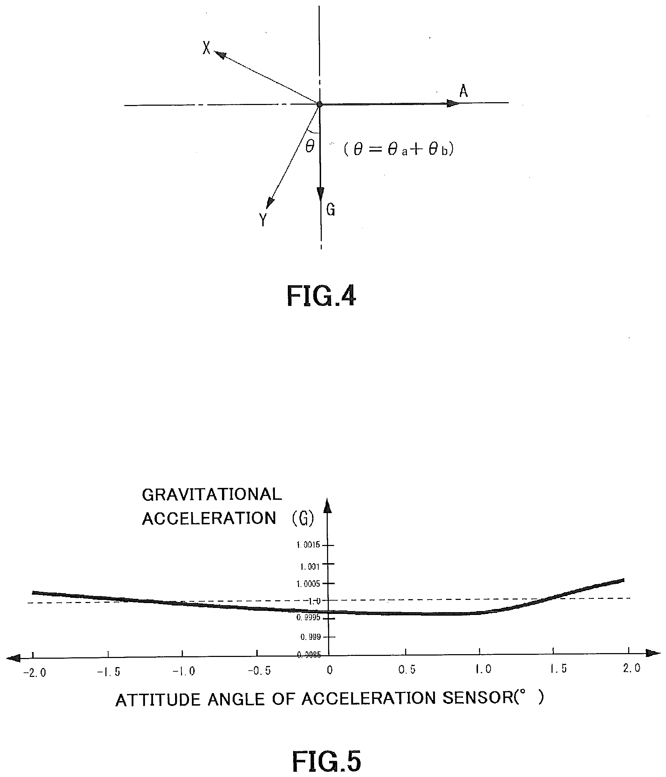

FIG.3B shows the state of the vehicle attitude change where the rear portion of the vehicle relatively moves downward and the front portion relatively moves upward due to the influence of the occupant, cargo or the like. In this case, while the vehicle is traveling (accelerating), as shown in the figure, the X axis and the Y axis of the first acceleration sensor 11 are inclined as the attitude of the vehicle changes, but the direction of the vehicle traveling direction acceleration **A** does not incline and remains parallel to the road surface on which the vehicle is positioned. FIG. 4 shows this relationship in an enlarged manner. As shown in FIG.3B, the angle θa formed between the direction parallel to the road surface and the front-to-rear direction of the vehicle corresponds to the attitude angle of the vehicle. This relationship applies not only to a road where its surface is horizontal, but also where its surface is inclined. (Refer to FIG.3C.) When the road surface is inclined, the first acceleration sensor 11 is inclined by an angle θ (=0a+0b) which is the sum of an inclination angle θb of the road surface and the attitude angle θa of the vehicle.

FIG.5 is a graph for explaining the operation of sensor abnormality determination part. If the first acceleration sensor 11 is in an ideal state, then the square root of the sum of the square of the X axis and the Y axis acceleration value $\left( = \sqrt{(x^2 + y^2)} \right)$ becomes equal to the actual value of gravitational acceleration (1G=9.80655 m/s$^2$). This relationship remains the same even when the attitude of the first acceleration sensor 11 changes, that is, even when the attitude angle of the vehicle changes. However, in reality, due to the above-stated various factors, as shown in the figure, the gravitational acceleration value calculated from the detected values of the first acceleration sensor 11 may differ from the actual gravitational acceleration value(1G). Further, as shown in the figure, this difference may also fluctuate depending on the attitude angle of the first acceleration sensor 11.

Thus, the sensor abnormality determination part 20 calculates the sum of the square of the X axis and the Y axis acceleration value of the first acceleration sensor 11 (x$^2$+y$^2$) or the square root thereof $\left( \sqrt{(x^2 + y^2)} \right)$, and if the difference between the calculated value and the gravitational acceleration (or its square value) exceeds a predetermined value, it determines whether the operation of the first acceleration sensor 11 is normal or not. Here, the predetermined value is arbitrarily set, and may be set to 0.002 in the case of (x$^2$+y$^2$) which is the value prior to taking a square root, for example. In this case, if the difference is 0.002 or more, then the first acceleration sensor 11 is determined to be abnormal. Note that the determination may also be based on a predetermined value defined with respect to the value obtained by taking the square root $\left( \sqrt{(x^2 + y^2)} \right)$.

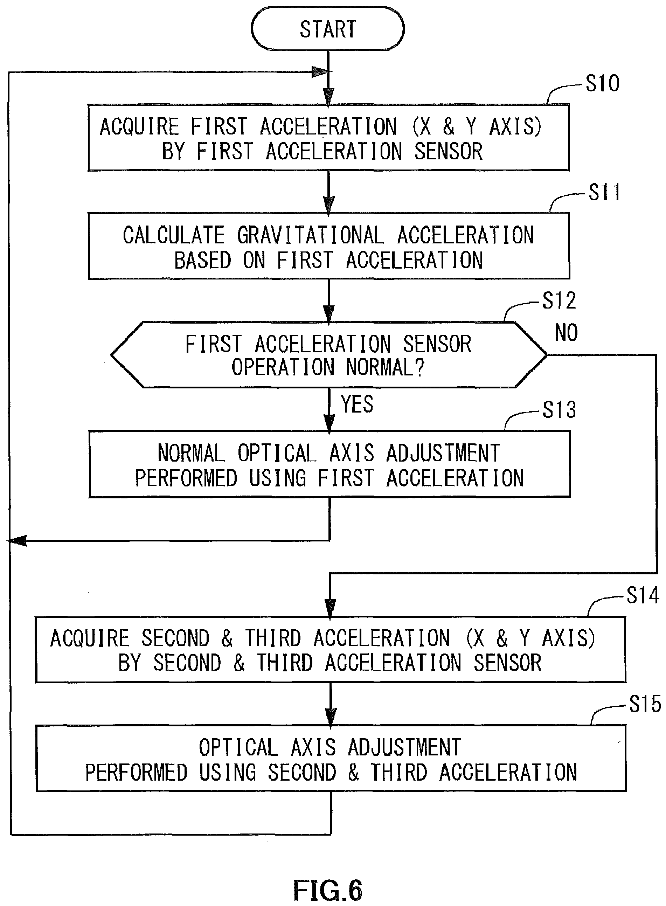

FIG.6 is a flowchart for explaining the operation of the vehicular lamp system. Here, processing contents of the control part 10 is mainly shown. Further, the sequence of each processing block shown here may be changed as long as no inconsistency occurs among them.

The control part 10 acquires the first acceleration values which are the X, Y axis acceleration values detected by the first acceleration sensor 11 (step S10).

Next, the sensor abnormality determination part 20 in the control part 10 calculates the gravitational acceleration (or its square value) based on the acquired values of the first acceleration (step S 11). And based on the value of the calculated gravitational acceleration, the sensor abnormality determination part 20 determines if the the operation of the first acceleration sensor 11 is normal or not (step S 12).

If the sensor abnormality determination part 20 determines that the operation of the first acceleration sensor 11 is normal (step S12; YES), then a normal optical axis adjustment is performed using the values of the first acceleration (each of the X, Y axis acceleration) (step S13). Specifically, the angle calculation part 21 calculates the attitude angle of the vehicle using the values of the first acceleration, then based on the attitude angle θ, the optical axis setting part 22 generates a control signal for controlling the optical axis and outputs the control signal to each lamp unit 14. In each lamp unit 14, the optical axis adjusting part 23adjusts the optical axis based on the control signal provided from the optical axis setting part 22. Thereafter, the process returns to step S10, and the subsequent processes are repeated.

Here, in a normal optical axis adjustment using the first acceleration values, the optical axis adjustment is not limited to a specific technique and various known techniques may be used as disclosed in Patent Document 1 or Patent Document 2.

On the other hand, if the sensor abnormality determination part 20 determines that the operation of the first acceleration sensor 11 is abnormal (step S12; NO), the control part 10 obtains the second acceleration values and the third acceleration values which are the acceleration values of each of the X, Y axis detected by the second acceleration sensor 12 and the third acceleration sensor 13 (step S14).

In this case, as an alternative adjustment process, the optical axis adjustment is performed using the values of the second acceleration and the third acceleration (step S15). Specifically, the angle calculation part 21 calculates the attitude angle of the vehicle using the values of the second acceleration and the third acceleration, and based on this attitude angle $\theta$, the optical axis setting part 22 generates a control signal for controlling the optical axis a of the lamp unit 14 and provides the control signal to each lamp unit 14. Thereafter, the process returns to step S10, and the subsequent processes are repeated.

Here, the attitude angle may be calculated by obtaining the average value of the second acceleration value and the third acceleration value, or by obtaining the attitude angle of the second acceleration value and the third acceleration value respectively and then taking the average of the two attitude angles. Also, only either one of the second acceleration value or the third acceleration value may be used to obtain the attitude angle. Further, the attitude angle may be calculated by obtaining the average value of the first acceleration value and the second acceleration value (, and/or the third acceleration value), or by obtaining the attitude angle of the first acceleration value and the second acceleration value (, and/or the third acceleration value) respectively and then taking the average of the multiple attitude angles.

As an alternative to the optical axis adjustment, a fail-safe processing such as restoring the optical axis position of each lamp unit 14 to the initial setting may be performed.

FIG.7 is a block diagram showing the configuration of the vehicular lamp system of the second embodiment. Configuration changes from the first embodiment are that a GPS sensor 15, a gravitational acceleration database 16 (abbreviated as GRAV ACC DB in FIG.7) are added, and further, a reference value setting part 24 (abbreviated as REF VALUE SET PART in FIG.7) is added in the control part 10. Also, in the vehicular lamp system of the second embodiment, the sensor abnormality determination part 20 determines the abnormality of the acceleration sensor by using a reference value (an actual value of the gravitational acceleration) which is variably set according to the current location of the vehicle, which is different from the first embodiment. Other configuration of the vehicular lamp system remains the same as the first embodiment. Hereinafter, these changes will be mainly described in detail.

The GPS sensor 15 is installed at a predetermined position in the vehicle and detects a point (location information) where the vehicle exists. The GPS sensor 15 may be incorporated in a car navigation system or the like provided in the vehicle in advance.

The gravitational acceleration database 16 is a database that stores actual values of gravitational acceleration at various points on the ground. In other words, strictly speaking, since the actual value of gravitational acceleration on the ground differs at each point, the gravitational acceleration database 16 stores the actual value of gravitational acceleration at each point as a data table. Each point (location) referred to here may be defined as a an area obtained by partitioning the ground by a mesh size of several kilometers, for example.

According to the current location of the vehicle detected by the GPS sensor 15, the reference value setting part 24 of the control part 10 retrieves the actual value of the gravitational acceleration corresponding to the current location from the gravitational acceleration database 16, and variably sets the reference value (the actual value of gravitational acceleration) used by the sensor abnormality determination part 20 for the determination of the acceleration sensor abnormality. Specifically, although the reference value which is the actual value of the gravitational acceleration was fixed at 1G in the first embodiment, in the present embodiment, the reference value setting part 24 variably sets the reference value (the actual value of the gravitational acceleration) according to each location. This reference value setting part 24 processing may be added prior to step S12, for example, in the flowchart shown in FIG. 6.

Based on the difference between the actual value of the gravitational acceleration set by the above-described reference value setting part 24 and the calculated gravitational acceleration value based on the detected values of the first acceleration sensor 11, the sensor abnormality determination part 20 determines the abnormality of the acceleration sensor 11 operation.

According to each of the embodiments described above, in the automatic leveling control using acceleration sensors, if there is a possibility of abnormality in the operation of the mainly used first acceleration sensor, then the leveling control is performed while detecting values from the other acceleration sensors, or a predetermined fail-safe control is performed, thereby improving the reliability of the automatic leveling control. Also, according to the second embodiment, the leveling control is performed while taking in account the difference in the gravitational acceleration at each location, thereby further improving the reliability of the automatic leveling control.

It should be noted that this invention is not limited to the subject matter of the foregoing embodiments, and can be implemented by being variously modified within the scope of the present invention as defined by the appended claims. For example, in the above-described embodiments, in order to simplify the description, cases have been exemplified where the axial direction of the X axis of the acceleration sensors match the front-to-rear direction of the vehicle and the axial direction of the Y axis match the up-and-down direction of the vehicle, but the X axis and the Y axis of the sensors may be arranged to be inclined from the front-to-rear direction and the up-and-down direction of the vehicle.

Further, in the above-described embodiments, the direction of the light source of each lamp unit is adjusted by an actuator, but the optical axis adjustment method is not limited thereto. For example, in a case where the light source of the lamp unit has a configuration in which a plurality of light-emitting elements are arranged in a matrix, by moving the row of the light-emitting element to be emitted up and down according to the attitude angle, automatic leveling control can be achieved.

**Claims**

1. A control device for a vehicular lamp which variably controls optical axis of the vehicular lamp in accordance with an attitude change in the pitch direction of a vehicle comprising:

   a sensor abnormality determination part which determines the presence or absence of abnormal operation of a first acceleration sensor based on first acceleration values associated with each of the front-to-rear direction and the up-and-down direction of the vehicle detected by the first acceleration sensor,
   an angle calculation part which uses the first acceleration values to obtain an attitude angle of the vehicle when the sensor abnormality determination part determines that there is no abnormality in the operation of the first acceleration sensor, and uses second acceleration values detected by a second acceleration sensor provided at a position different from the first acceleration sensor of the vehicle when the sensor abnormality determination part determines that there is an abnormality in the operation of the first acceleration sensor,
   an optical axis setting part which generates a control signal for controlling the optical axis of the vehicular lamp based on the attitude angle of the vehicle obtained by the angle calculation part, and provides the control signal to the vehicular lamp.

2. The control device for a vehicular lamp according to claim 1,
   wherein the angle calculation part uses the second acceleration values and the first acceleration values to obtain the attitude angle of the vehicle when the sensor abnormality determination part determines that there is an abnormality in the operation of the first acceleration sensor.

3. The control device for a vehicular lamp according to claim 1 or claim 2,
   wherein the second acceleration sensor is provided for controlling a device other than the optical axis adjustment of the lamp units of the vehicle.

4. The control device for a vehicular lamp according to any one of claims 1, 2, and 3,
   wherein the first acceleration sensor is installed at a position relatively closer to the center of the vehicle than the second acceleration sensor.

5. The control device for a vehicular lamp according to any one of claims 1, 2, 3 and 4,
   wherein the sensor abnormality determination part determines that the operation of the first acceleration sensor 11 is abnormal if the difference between the calculated gravitational acceleration value based on the first acceleration values and the actual value of gravitational acceleration exceeds a predetermined value.

6. The control device for a vehicular lamp according to any one of the preceding claims further comprising:
   a reference value setting part which variably sets the actual value of gravitational acceleration used by the sensor abnormality determination part according to the current position of the vehicle.

7. A vehicular lamp system including a control device according to any one of the preceding claims and a vehicle lamp controlled by the control device.

VEHICLE SPEED SIGNAL   H/L SIGNAL   AC SENSOR 11   AC SENSOR 12   AC SENSOR 13

CONTROL PART 10

SENSOR ABN DET PART ~20

ANGLE CALC PART ~21

OPT AXIS SET PART ~22

LAMP UNIT 14

OPT AXIS ADJ PART ~23

LAMP UNIT 14

OPT AXIS ADJ PART ~23

FIG.1

FIG.2

FIG.3A

FIG.3B

FIG.3C

**FIG.4**

$(\theta = \theta_a + \theta_b)$

GRAVITATIONAL
ACCELERATION (G)

1.0015
1.001
1.0005
1.0
0.9995
0.999
0.9985

-2.0    -1.5    -1.0    -0.5    0    0.5    1.0    1.5    2.0

ATTITUDE ANGLE OF ACCELERATION SENSOR(°)

**FIG.5**

START

ACQUIRE FIRST ACCELERATION (X & Y AXIS)
BY FIRST ACCELERATION SENSOR — S10

CALCULATE GRAVITATIONAL ACCELERATION
BASED ON FIRST ACCELERATION — S11

FIRST ACCELERATION SENSOR
OPERATION NORMAL? — S12  NO

YES

NORMAL OPTICAL AXIS ADJUSTMENT
PERFORMED USING FIRST ACCELERATION — S13

ACQUIRE SECOND & THIRD ACCELERATION (X & Y AXIS)
BY SECOND & THIRD ACCELERATION SENSOR — S14

OPTICAL AXIS ADJUSTMENT
PERFORMED USING SECOND & THIRD ACCELERATION — S15

FIG.6

FIG.7

Europäisches
Patentamt

European
Patent Office

Office européen
des brevets

# EUROPEAN SEARCH REPORT

Application Number

EP 18 17 2762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/075246 A1 (BAYERISCHE MOTOREN WERKE AG [DE]; KUHL PATRICK [DE]; BILZ FRANK [DE];) 18 August 2005 (2005-08-18) * the whole document * | 1-4,7 | INV. B60Q1/115 |
| X | WO 2016/114159 A1 (KOITO MFG CO LTD) 21 July 2016 (2016-07-21) * claims 14-17; figures 1-20 * | 1,3-7 | |
| X | EP 2 871 094 A1 (AUTOMOTIVE LIGHTING REUTLINGEN [DE]) 13 May 2015 (2015-05-13) * paragraphs [0014] - [0056]; figures 1-3 * | 1-4,7 | |
| A,D | JP 2009 126268 A (PANASONIC CORP) 11 June 2009 (2009-06-11) * paragraphs [0008], [0039]; figures 1, 2 * | 1 | |
| A | JP 2005 291860 A (SUMITOMO PRECISION PROD CO) 20 October 2005 (2005-10-20) * paragraphs [0015], [0039] * | 5 | TECHNICAL FIELDS SEARCHED (IPC) |
| A | US 2015/291176 A1 (JEONG DONGHOON [KR] ET AL) 15 October 2015 (2015-10-15) * claim 1 * | 6 | B60Q |
| A | JP 2010 247551 A (PANASONIC CORP) 4 November 2010 (2010-11-04) * claim 1; figure 1 * | 2,4 | |

The present search report has been drawn up for all claims

| Place of search | Date of completion of the search | Examiner |
|---|---|---|
| Munich | 11 October 2018 | Sarantopoulos, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 17 2762

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2018

| Patent document cited in search report | | Publication date | Patent family member(s) | | Publication date |
|---|---|---|---|---|---|
| WO 2005075246 | A1 | 18-08-2005 | DE 102004006133 A1<br>EP 1711371 A1<br>US 2007025112 A1<br>WO 2005075246 A1 | | 01-09-2005<br>18-10-2006<br>01-02-2007<br>18-08-2005 |
| WO 2016114159 | A1 | 21-07-2016 | CN 107206928 A<br>EP 3246205 A1<br>JP WO2016114159 A1<br>US 2017297477 A1<br>WO 2016114159 A1 | | 26-09-2017<br>22-11-2017<br>19-10-2017<br>19-10-2017<br>21-07-2016 |
| EP 2871094 | A1 | 13-05-2015 | DE 102013221926 A1<br>EP 2871094 A1 | | 30-04-2015<br>13-05-2015 |
| JP 2009126268 | A | 11-06-2009 | NONE | | |
| JP 2005291860 | A | 20-10-2005 | NONE | | |
| US 2015291176 | A1 | 15-10-2015 | CN 104973064 A<br>DE 102014116922 A1<br>KR 101558388 B1<br>US 2015291176 A1 | | 14-10-2015<br>15-10-2015<br>07-10-2015<br>15-10-2015 |
| JP 2010247551 | A | 04-11-2010 | NONE | | |

EPO FORM P0459

For more details about this annex : see Official Journal of the European Patent Office, No. 12/82

**EP 3 406 487 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009126268 A

- JP 5787649 B